# EUROPEAN PATENT SPECIFICATION

(11) **EP 0 311 289 B1**
(45) Date of publication and mention of the grant of the patent: **27.01.1993**
(21) Application number: 88308959.1
(22) Date of filing: 28.09.1988
(51) Int. Cl.: C04B 35/10

(54) **SiC-Al2O3 composite sintered bodies and method of producing the same**
SiC-A12O3-Sinterverbundkörper und Verfahren zu ihrer Herstellung
Corps composites frittés de SiC-A12O3 et procédé de leur production

(30) Priority: 30.09.1987 JP 244159/87
(43) Date of publication of application: 12.04.1989
(73) Proprietor: NGK INSULATORS, LTD., Nagoya City Aichi Pref. (JP); Niihara, Koichi, Yokosuka City Kanagawa Prefecture (JP)
(72) Inventor: Niihara, Koichi 1-2-2 Hashirimizu-Shukusha, Yokosuka City Kanagawa Pref. (JP); Nakahira, Atsushi 407 Dokushin-Ryo, Yokosuka City Kanagawa Pref. (JP)
(74) Representative: Paget, Hugh Charles Edward

(56) References cited:
- JP-A-61 021 964
- JP-A-61 021 965
- JP-A-61 174 165

## Description

This invention relates to SiC-Al₂O₃ composite sintered bodies and a method of producing the same, and more particularly to SiC-Al₂O₃ composite sintered bodies suitable for use in structural materials having high strength and toughness and a method of producing the same.

Al₂O₃ is widely used as a substrate or a package for integrated circuit, a chip for cutting tool or a refractory material. However, the strength and toughness of Al₂O₃ are low as compared with those of silicon nitride sintered body, so that there is a restriction in its use as a structural material for engine parts and the like.

In order to increase the strength and toughness of Al₂O₃, it is known to disperse SiC particles or SiC whisker into Al₂O₃. For example, the increase of the toughness in the Al₂O₃ sintered body through the dispersion of SiC whisker is disclosed in American Ceramic Society Bulletin, 64 [2], 298-304 (1985). Furthermore, Japanese Patent laid open No. 59-3,766 discloses the increase of the toughness in the Al₂O₃ sintered body having an entangled microstructure of SiC and Al₂O₃ and high strength and toughness. In the microstructure of these sintered bodies, SiC is liable to be continuous phase, so that when the sintered body is heated in air, the oxidation of SiC is violent and the strength drops, and the sintered body can not be used at high temperature for a long time.

Furthermore, the increase of the strength, toughness and hardness in the Al₂O₃ sintered body through the dispersion of SiC particles is disclosed in Japanese Patent laid open No. 61-21,964 and No. 61-174,165. In these sintered bodies, however, SiC particles are mainly existent in the grain boundary of Al₂O₃ particles as a matrix, so that the sufficient increase of the strength or toughness can not be attained in the Al₂O₃ sintered body causing the intergranular breakage during fracture.

It is, therefore, an object of the invention to solve the aforementioned drawbacks of the conventional technique and provide SiC-Al₂O₃ composite sintered body, in which the strength and toughness are increased. The invention achieves dispersion enhancement of SiC particles by dispersing SiC particles into Al₂O₃ particles as a matrix, even if the Al₂O₃ sintered body suffers intergranular breakage during fracture. It is another aspect of the invention to provide SiC-Al₂O₃ composite sintered bodies, in which SiC particles are individually present in the Al₂O₃ matrix and the oxidation resistance is good and use at high temperature is possible for a long time, and a method of producing the same.

According to a first aspect of the invention, there is provided an SiC-Al₂O₃ composite sintered body, as set out in claim 1.

According to a second aspect of the invention, there is provided a method of producing a SiC-Al₂O₃ composite sintered body, as set out in claim 4.

The invention will be described with reference to the accompanying drawings, wherein:
Fig. 1 is a microphotograph showing a particle structure of SiC-Al₂O₃ composite sintered body according to the invention; and
Fig. 2 is a graph showing a temperature change of strength in Example 1 of the SiC-Al₂O₃ composite sintered body according to the invention.

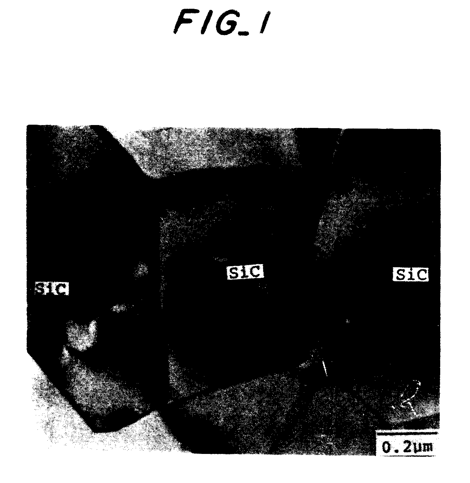

The SiC-Al₂O₃ composite sintered body according to the invention will be described in detail below. In Fig. 1 is shown an example of results observed by a penetration type electron microscope in an SiC-Al₂O₃ composite sintered body according to the invention, from which it is apparent that the SiC-Al₂O₃ composite sintered body according to the invention is constructed by dispersing SiC particles into Al₂O₃ particles as a matrix. The particle sizes of SiC particle and Al₂O₃ particle are measured by means of a penetration type electron microscope or a scanning type electron microscope. According to the invention, it is preferable that the SiC particle to be dispersed has a particle size of not more than 0.5 µm and the α-Al₂O₃ particle as a matrix has a particle size of not more than 5 µm. In the SiC-Al₂O₃ composite sintered body according to the invention, the crack growth in the Al₂O₃ particles of the Al₂O₃ sintered body causing the intergranular breakage during the breaking is prevented by SiC particles to increase the toughness. Furthermore, the sintered body is constructed by fine SiC particles and Al₂O₃ particles, so that the SiC particle or Al₂O₃ particle does not form a breakage generating source and the sintered body has a high strength. Since the effect of preventing the crack growth in the Al₂O₃ particles is sufficiently attained by the SiC particles, the sintered body is preferable to contain not less than 2 mol% of SiC particle. Preferably there are less than 20 mol% of SiC particles.

Further, the SiC particles are individually existent in the Al₂O₃ matrix, so that it is hard to oxidize the SiC particles and the oxidation resistance is excellent. Particularly, in order to independently retain the SiC particles in the Al₂O₃ matrix, the sintered body preferably contains not more than 10 mol% of SiC particles. Since the SiC-Al₂O₃ composite sintered body according to the invention has excellent oxidation resistance, it may be heat-annealed in air to remove the surface defects such as poor shaping, working and the like and further increase the strength.

One production process for the composite sintered body according to the invention will be described in detail below. The particle sizes of SiC particle and Al₂O₃ powder as a starting material are measured by a penetration type electron microscope. The Al₂O₃ particles in Al₂O₃ powder grow during the sintering and enclose SiC particles therein, so that they have a sufficiently small particle size as the starting powder and should be grown in the sintering. Particularly, the particle size of Al₂O₃ is not more than 0.5 µm. On the other hand, the SiC particles are enclosed in the grown Al₂O₃ particles in the sintering, so that they are necessary to be fine and are not more than 0.5 µm. Moreover, the particle size of SiC particle is preferably not more than 0.2 µm.

As the starting Al₂O₃ powder, γ-Al₂O₃ or the like may be used if it is converted into α-Al₂O₃ after the sintering. The SiC particle may have α type or β type. The Al₂O₃ powder and SiC particle preferably have a high purity because the impurity particularly degrades the high temperature properties. Preferably, the SiC particle contains metal impurity of not more than 1% and oxygen of not more than 1%.

The above Al₂O₃ powder and SiC particles are mixed to obtain a mixed powder for shaping. The mixing is carried out under a wet or dry type by means of a ball mill or the like. The resulting mixed powder is shaped into a desired form by dry pressing, injection molding or the like.

The shaped body made from the mixed powder of Al₂O₃ powder and SiC particles is densified by pressureless sintering, hot pressing, hot isostatic pressing (HIP) or the like. In this case, it is necessary to set the firing conditions so that α-Al₂O₃ particles are only grown to enclose SiC particles therein and the growth of α-Al₂O₃ particles is not excessive. For this purpose, the firing temperature is 1,400-1,800°C. When the firing temperature is lower than 1,400°C, the densification is insufficient and the particles do not grow, while when it is higher than 1,800°C, the growth of Al₂O₃ particle and SiC particle is excessive and the SiC-Al₂O₃ composite sintered body obtained by dispersing fine SiC particles into fine Al₂O₃ particles according to the invention can not be obtained. Furthermore, it is necessary to consider that the growth of Al₂O₃ particles is suppressed by the addition of SiC particles.

The firing atmosphere may be an inert atmosphere such as nitrogen, argon or the like, or a reducing atmosphere such as hydrogen or the like for preventing the oxidation of SiC particle. As the hot isostatic pressing, there may be performed a method wherein a presintered body having less open pore is previously produced by the pressureless pressing or the hot pressing and then subjected to the hot isostatic pressing, or a method wherein the shaped body is airtightly sealed with a metal, glass or the like and then subjected to the hot isostatic pressing.

The following examples are given in illustration of the invention and are not intended as limitations thereof.

α-Al₂O₃ powder having a particle size shown in the following Table 1 and a purity of not less than 99% and β-SiC particle having an average particle size of 0.2 µm and a purity of 98% were mixed at a mixing ratio as shown in Table 1 in a polyethylene container containing iron balls each coated with polyethylene under a wet state of acetone for 10 hours. The thus obtained mixed powder was shaped into a size of 50 mm in diameter and 10 mm in thickness and pressed under a pressure of 200 MPa. Then, the shaped body was hot pressed at a temperature shown in Table 1 under a pressure of 30 MPa to obtain SiC-Al₂O₃ composite sintered bodies of Examples 1-8 according to the invention and Comparative Examples 9-12. All of these sintered bodies had a porosity of not more than 1% and were dense. In Examples 1-8 and Comparative Examples 9-12, the composition of the sintered body was coincident with that of the mixed powder as a result of crystal quantification through chemical analysis and X-ray diffraction. A penetration type electron microphotograph of the sintered body in Example 3 is shown in Fig. 1. The particle sizes of Al₂O₃ particle and SiC particle and the position of SiC particle in Examples 1-8 and Comparative Examples 9-12 were measured by penetration type electron microscope and scanning type electron microscope to obtain results as shown in Table 1.

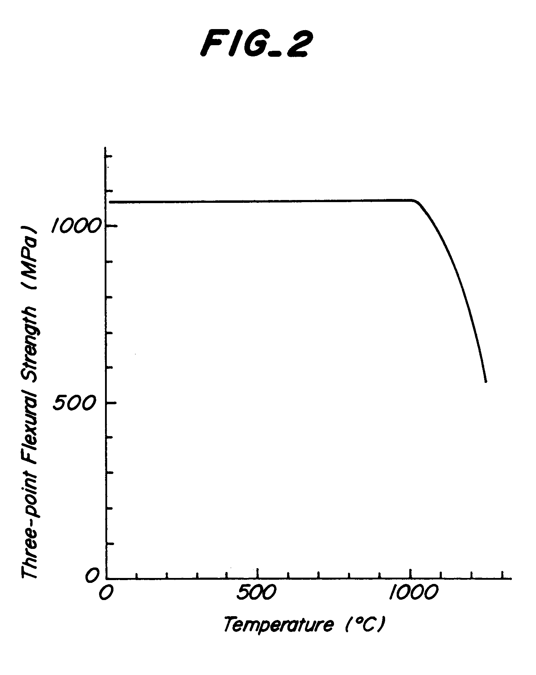

Furthermore, in Examples 1-8 and Comparative Examples 9-12, the three-point flexural strength at room temperature was measured according to a method of JIS R1601 and the fracture toughness value (K_{IC}) was measured according to an indentation fracture method to obtain results as shown in Table 1. Moreover, Fig. 2 shows the temperature change of three-point flexural strength in the sintered body of Example 3 when this strength was measured over a temperature range of from room temperature to 1,400°C. And also, the test specimens of Examples 1-8 were heated in air at 1,200°C for 100 hours and the three-point flexural strength at 1,000°C thereof was measured to obtain results as shown in Table 1.

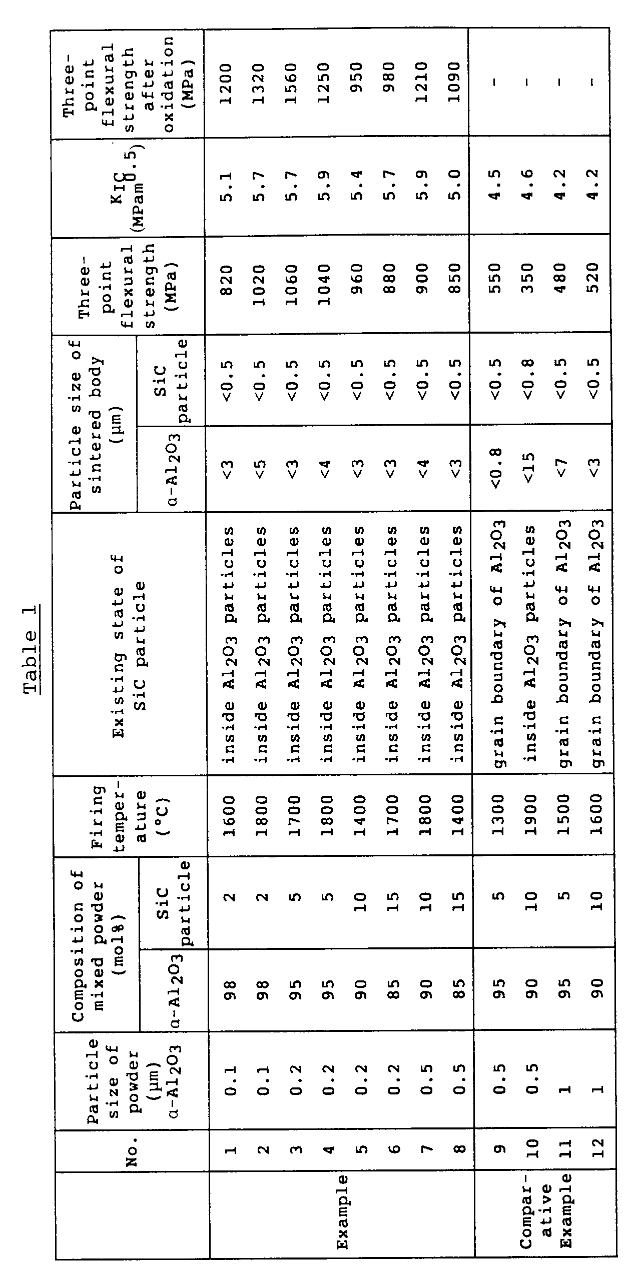

As seen from the above results, the SiC-Al₂O₃ composite sintered bodies according to the invention have a three-point flexural strength of not less than 850 MPa and a toughness K_{IC} of not less than 5.0 MPam^{0.5}, which are higher than those of the comparative examples, and are excellent in the high temperature properties up to 1,000°C and good in the oxidation resistance. Furthermore, it is possible to increase the strength by the effect of removing the surface defect through heating.

As mentioned above, the SiC-Al₂O₃ composite sintered bodies according to the invention have for example a strength of not less than 850MPa and K_{IC} of not less than 5.0 MPam^{0.5} through the dispersing reinforcement of SiC particles by dispersing SiC particles into Al₂O₃ particles as a matrix even in the Al₂O₃ sintered body suffering the intergranular breakage during fracture and are suitable as a structural material having high strength and toughness. Furthermore, they are applicable to a high-temperature structure material such as engine parts or the like because they are excellent in the high temperature properties up to 1,000°C and good in the oxidation resistance owing to the individual presence of SiC particles in the Al₂O₃ matrix and can be used at high temperature for a long time.

## Claims

1. An SiC-Al₂O₃ composite sintered body, characterized in that SiC particles are dispersed inside α-Al₂O₃ particles forming a matrix and in that the body has a three-point flexural strength of not less than 820 MPa.

2. A composite sintered body according to claim 1, wherein said SiC particles have a particle size of not more than 0.5 µm and said Al₂O₃ particles have a particle size of not more than 5 µm.

3. A composite sintered body according to claim 1 or claim 2, wherein said body contains 2-10 mol% of SiC particles.

4. A method of producing a SiC-Al₂O₃ composite sintered body, which comprises forming a mixed powder comprising not less than 2 mol% of SiC particles having a particle size of not more than 0.5 µm and the remainder being Al₂O₃ powder having a particle size of not more than 0.5 µm, sintering the mixed powder at 1,400-1,800°C thereby producing a SiC-Al₂O₃ composite body having SiC particles of a particle size not more than 0.5 µm dispersed inside α-Al₂O₃ particles of a particle size not more than 5 µm forming a matrix.

5. A method according to claim 4, wherein said mixed powder contains 2-10 mol% of SiC particles.

## Patentansprüche

1. SiC-Al₂O₃-Sinterverbundkörper, dadurch gekennzeichnet, daß SiC-Teilchen innerhalb Matrix-bildender α-Al₂O₃-Teilchen dispergiert sind und daß der Körper eine Drei-Punkt-Biegefestigkeit von nicht weniger als 820 MPa besitzt.

2. Sinterverbundkörper gemäß Anspruch 1, worin besagte SiC-Teilchen eine Teilchengröße von nicht mehr als 0,5 µm und besagte Al₂O₃-Teilchen eine Teilchengröße von nicht mehr als 5 µm besitzen.

3. Sinterverbundkörper gemäß den Ansprüchen 1 oder 2, wobei besagter Körper 2-10 Mol-% SiC-Teilchen besitzt.

4. Verfahren zur Herstellung eines SiC-Al₂O₃-Sinterverbundkörpers, das das Formen eines Pulvergemischs mit nicht weniger als 2 Mol-% SiC-Teilchen mit einer Teilchengröße von nicht mehr als 0,5 µm und Rest Al₂O₃-Pulver mit einer Teilchengröße von nicht mehr als 0,5 µm, und das Sintern des Pulvergemischs bei 1.400-1.800°C zu einem SiC-Al₂O₃-Verbundkörper mit in Matrix-bildenden α-Al₂O₃-Teilchen einer Teilchengröße von nicht mehr als 5 µm dispergierten SiC-Teilchen einer Teilchengröße von nicht mehr als 0,5 µm umfaßt.

5. Verfahren gemäß Anspruch 4, worin besagtes Pulvergemisch 2-10 Mol-% SiC-Teilchen enthält.

## Revendications

1. Corps composite fritté en SiC-Al₂O₃ caractérisé en ce que des particules de SiC sont dispersées à l'intérieur de particules de α-Al₂O₃ formant une matrice et en ce que le corps a une résistance à la flexion en trois points de pas moins de 820 MPa.

2. Corps composite fritté selon la revendication 1, où lesdites particules de SiC ont une taille de particule de pas plus de 0,5 µm et lesdites particules de Al₂O₃ ont une taille de particule de pas plus de 5 µm.

3. Corps composite fritté selon la revendication 1 ou la revendication 2, où ledit corps contient 2-10% en moles de particules de SiC.

4. Méthode de production d'un corps composite fritté en SiC-Al₂O₃ qui comprend la formation d'une poudre mélangée comprenant pas moins de 2% en moles de particules de SiC ayant une taille de particule de pas plus de 0,5 µm, le restant étant de la poudre de Al₂O₃ ayant une taille de particule de pas plus de 0,5 µm, le frittage de la poudre mélangée à 1400-1800°C pour ainsi produire un corps composite en SiC-Al₂O₃ ayant des particules de SiC d'une taille de particule de pas plus de 0,5 µm dispersées à l'intérieur des particules de α-Al₂O₃ d'une taille de particule de pas plus de 5 µm, formant une matrice.

5. Méthode selon la revendication 4, où ladite poudre mélangée contient 2-10% en moles de particules de SiC.
